## Europäisches Patentamt

## European Patent Office

## Office européen des brevets

(11) Publication number: **0 174 288**
**B1**

# EUROPEAN PATENT SPECIFICATION

(45) Date of publication of patent specification: **23.11.88**

(51) Int. Cl.⁴: **G 01 B 5/25, G 01 B 7/31**

(21) Application number: **85850266.9**

(22) Date of filing: **23.08.85**

(54) Apparatus for use in the alignment of rotating equipment.

(30) Priority: **06.09.84 NO 843542**

(43) Date of publication of application:
**12.03.86 Bulletin 86/11**

(45) Publication of the grant of the patent:
**23.11.88 Bulletin 88/47**

(84) Designated Contracting States:
**DE GB SE**

(56) References cited:
**US-A-2 815 582**

(73) Proprietor: **Eriksen, Yngve**
**Kattestenveien 5**
**N-1750 Halden (NO)**

(72) Inventor: **Eriksen, Yngve**
**Kattestenveien 5**
**N-1750 Halden (NO)**

(74) Representative: **Delmar, John-Ake**
**Östermalmsgatan 45**
**S-114 26 Stockholm (SE)**

Courier Press, Leamington Spa, England.

**Description**

This invention relates to an apparatus for use in the alignment of rotating equipment, for example two spindles which are to be brought into axial alignment with each other, of the type disclosed in the preamble to the subsequent, independent claim 1.

The alignment of rotating equipment is a well-known concept within that part of the industry which uses this type of equipment. The problem has all the time been to find a satisfactory tool for the attachment of dial indicators or, more recently, feelers, so that the measurments can be carried out on the rotating equipment for the control and possible alignment of this.

Usually a special holding tool has been made for each coupling diameter and each type of coupling, connecting two rotating spindles or other rotating equipment. This work has in many cases been more time-consuming than the alignment itself.

Nearly all the various types of equipment for said use found on the market and utilized in the industry are, in practice, applicable to a very limited area, most often because of too large building measurements and difficult installation.

From US—A—1 674 417 and 1 825 988 is previously known a holding head with fastening facilities for removal mounting to a spindle and provided with a rod which is slidably movable parallel to the spindle and which carries a radially adjustable dial indicator. The object of this known apparatus is to check that the spindle, particularly the spindle or shaft of a front wheel of automobils has not been bent due to loads to which the spindle has been subjected. In this case, it is only intended to have the apparatus rotated manually around the mounting point at the basis of the spindle and to check by means of the dial indicator whether the outer end of said spindle is in axial alignment with the inner basis end thereof. The same object also forms the basis of the US—A—2 235 383 which discloses a fastening means which is constituted by a flexible elongated body, such as a chain adapted to be tightened circumferentially around a shaft. The holding head around the chain is tightened, is hereby provided with two surfaces of a V-shaped section adapted to engage the peripheral surface of a shaft or coupling means, whereby when tightening said chain, the position of the head will be correctly oriented and fastened to the peripheral surface or shaft and at different diameters thereof. However, the devices known from said cited patent specifications are not adapted to indicate or correct, if desired, errors in shafts which are to be in mutual axial alignment, which is the object of the device according to the present invention. The Danish patent specification 53120 discloses an apparatus for indication and correction, if desired, of errors in shafts which are to be in mutual axial alignment. Said apparatus, however, differs completely from the above-stated device and will not be further discussed here.

An apparatus for determining the misalignment of a pair of coupled shafts is known from US—A—2 815 582, the disclosure of which forms the basis of the preamble of Claim 1.

The object of the present invention is to achieve an apparatus or a holding tool for the purpose stated above, said apparatus being applicable to all ordinary couplings for rotating equipment, irrespective of the diameter or shape of the coupling. One does not, however, consider special couplings, such as, for example, claw couplings, which must be aligned in a very special way, but these are usually in a minority in ordinary industry.

The apparatus or holding tool according to the invention is small and light and very timesaving. All factories with maintenance departments which today perform their own installations and maintenance work are capable of using the equipment according to the invention, said equipment being applicable to a greater area than that which already is on the market.

The above purpose is, according to the invention, achieved by means of the features disclosed in the characterizing clause of the subsequent independent claim 1 and in the subsequent dependant claims.

The invention will be further described below, with reference to an embodiment shown in the drawing, wherein.

Figure 1 shows the apparatus for use in the alignment of rotating equipment viewed in perspective and in a partly dismounted state,

Figure 2 shows the apparatus in perspective in a position ready for use on a coupling for connecting two spindles, said coupling being of the flange type, and

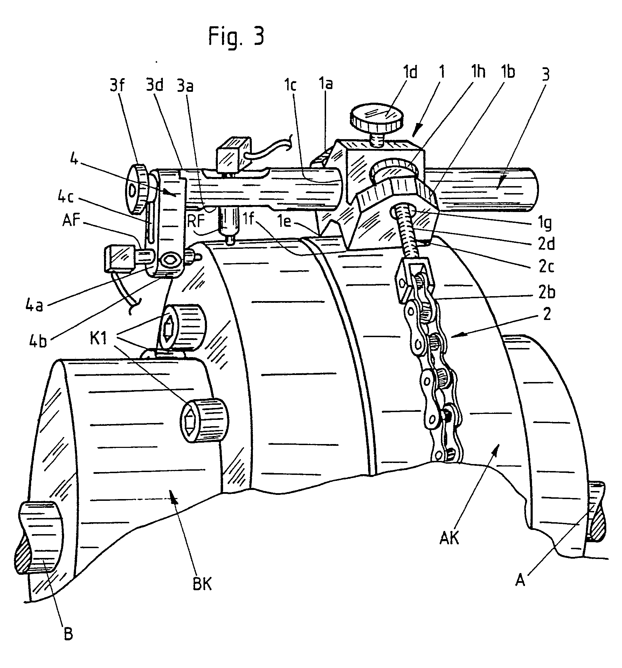

Figure 3 shows the same as Figure 2, but with the feelers placed against the flangeless part of the coupling.

The apparatus for use in the alignment of rotating equipment, for example two spindles A, B which are to be brought into axial alignment with each other, comprises a holding head 1 with fastening means 2 in the form of a chain for detachable, peripheral attachment to one coupling section AK in a coupling comprising two coupling sections AK and BK, placed each on its own spindle A, B and held together by means of coupling bolts K1. The chain 2 lies peripherally strapped around the circular cylinder area of the coupling section AK and is with one end 2a fastened to one side 1a of the holding head 1 and with its other end 2b to a tightening means 2c comprising a stretching screw 2d at the opposite side 1b of the holding head 1. The end of the stretching screw 2d is non-rotatably connected with the end 2g of the chain 2, and runs freely through a bore 1g of one side 1b of the holder head 1, enaging with a nut 1h, positioned to move freely against the limiting edge of the bore in side 1b. The end 2a of the chain 2 is adjustably attached to the holding head 1 in that the chain runs through an aperture 1i in side 1a of the holding head 1 with a locking screw 1j for locking enmeshment with the links of the chain 2. The chain can thus by placement around a coupling section AK or BK or a spindle A or B be preliminarily adjusted for fitting the actual diameter, in that it is pulled through the aperture 1i and thereafter fastened by means of the locking screw 1j. Finally, the chain 2 can be tightened by means of the stretching screw 2d and the nut 1h, so that the holding head 1 rests in a firm position against the coupling section or the spindle. In order to achieve a firm rest against spindles or coupling sections with different diameters, that side of the holding head 1 which rests against the spindle or coupling section is supplied with two ridges 1e, 1f, spaced apart and running parallel to the central axis of the spindle or coupling section on which the holding head 1 is mounted.

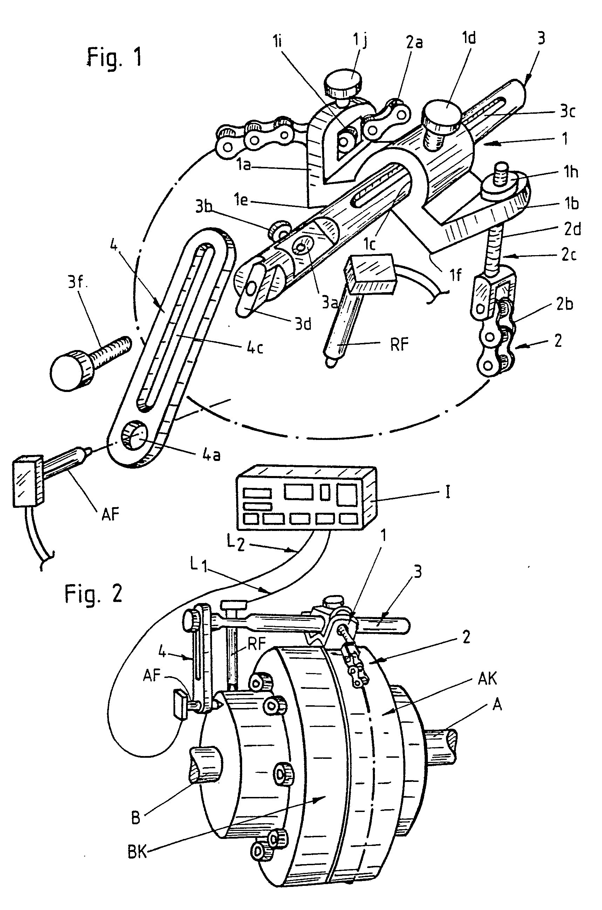

Parallel to said ridges 1e, 1f, the holding head 1 has a fastening rod 3, mounted so as to be movable in a bore 1c in the holding head 1 and having a longitudinal track 3c for engagement with a locking screw 1d, protruding into the bore 1c. The fastening rod 3 is thereby movable lengthwise but not rotatable. The fastening rod 3 has a bore 3a with a locking screw 3b for mounting a feeler or dial indicator RF which can be moved in the bore and be locked by means of the locking screw 3b, thereby being brought into radial contact with the periphery of the other spindle or coupling section. The fastening rod 3 has at one end an adjustable fastening slide 4, which forms a right angle with the fastening rod 3 and is radially directed toward the coupling section or spindle in that a longitudinal slit 4c in the fastening slide engages with an axial projection 3d at the end of the fastening rod 3, which is supplied with a locking screw 3f for the fastening slide 4. The fastening slide 4 has at its end a bore 4a with a locking screw 4b for adjustable fastening of a feeler or a dial indicator AF, positioned in the bore. Said feeler/dial indicator AF is axially adjustable in relation to the coupling section or spindle on which the holding head 1 is placed for adjustment of axial contact with an area at right angles with the other spindle, B in Figure 1, for example the side area of the coupling section BK.

When the apparatus, as shown in Figure 1, is mounted on the coupling section AK of the spindle A by means of the chain 2 and with the feelers/dial indicators RF and AF in contact with respectively the cylindrical circumference area and the coupling section's BK side area to this, said feelers/dial indicators RF, AF can now be set, whereafter the two spindles A, B with coupling sections AK, BK are turned in order to determine, by means of the apparatus, the position of the spindles A, B in relation to each other, viz, whether the spindles are in alignment with each other or are located somewhat obliquely in relation to each other. The feelers RF, AF, which through the wires L₁, L₂ are connected with a registration instrument I, will, when the spindles A, B and the coupling sections AK, BK have been turned one revolution, sense whether there are radial or axial movements between the point on one coupling section AK to which the holding head 1 is strapped and the two points on the other coupling section KB against which the feelers RF and AF rest. The extent of the movements is registered on the instrument I and can be used as a guide for aligning the rotating equipment. The alignment itself takes place in a manner known per se, in that one of the spindles, for example the spindle B is aligned through thin intermediate discs being placed between the component to which the shaft B belongs and the component's attachment to a frame, a process which will not be further described here.

Through the use of dial indicators instead of said feelers, the dial indicators' fluctuations from zero position for respectively radial and axial movement will be taken as a guide for placing intermediate discs for aligning one spindle B in relation to the other spindle A.

The fastening rods 3 and the fastening slides 4 can be available in sets of various lengths, so that the feelers/dial indicators RF, AF can be brought up to any cylindrical area or side area of the other spindle B, and feelers/dial indicators of various lengths can also be used in order to facilitate adjustment of the contact with the specific areas.

With these components of various lengths, the apparatus according to the invention can easily be mounted on any rotating equipment and the feelers/dial indicators be brought to rest against the specific areas through a selection of an appropriate length of respectively fastening rod 3, fastening slide 4 and the feelers'/dial indicators' cylindrical portions which are adjustably strapped through the bores 3a and 4a of the fastening rod 3 and the fastening slide 4 respectively.

**Claims**

1. Apparatus for use in the alignment of rotating equipment, for example two spindles (A, B) which are to be brought into axial alignment with each other, comprising adjustable fastening means, mountable on the rotating equipment, for feelers or dial indicators (RF, AF) for sensing possible radial and axial movements between reference points on the spindles (A, B) during the rotation of these, and a holding head (1) with fastening means (2) for detachable, peripheral fastening to the first of the spindles (A, B) or a coupling section (AK, BK) mounted on the spindles, said holding head (1) having an adjustable fastening rod (3) parallel to said spindle, with radially adjustable feeler/dial indicator (RF) for radial contact with the periphery of the other spindle or coupling section, characterized in that said fastening rod (3) has at one end a fastening slide (4), radially adjustable to the first spindle, with an axially adjustable feeler/dial indicator (AF) for axial contact with an area at right angles to the other spindle, for example the side area of the other coupling section.

2. Apparatus according to claim 1, characterized in that the fastening means (2) is constituted by a flexible, longitudinal body, for example a chain, designed to lie peripherally strapped around one of the spindles (A, B) or a circular cylinder area of the coupling section (AK, BK) thereof, said chain (2) longitudinally adjustably fastened with one end (2a) to one side (1a) of the holding head (1) for coarse adjustment of the length of the chain (2) and with its other end (2b) to a tightening means (2c), for example a stretching screw (2d) at the opposite side (1b) of the holding head (1), and in that the end (2a) of the chain (2) runs through an aperture (1i) of the side (1a) of the holding head (1) with a locking screw (1j) for locking engagement with the links of the chain (2) in order to provide for said coarse adjustment of the length of the chain (2).

3. Apparatus according to claim 1, characterized in that the fastening rod (3) is slidably adjustably mounted in a bore (1c) of the holding head (1) and has a longitudinal track (3c) for cooperation with a locking screw (1d) protruding into the bore (1c); that the feeler/dial indicator (RF) is mounted in a bore (3a) for slidable adjustment by means of a locking screw (3b) in the fastening rod (3); that the fastening slide (4) has a longitudinal slit (4c) for engagement with an axial protrusion (3d) at the end of the fastening rod (3), said protrusion being equipped with a locking screw (3f) for the fastening slide (4); and that the fastening slide (4) at its other end has a bore (4a) with a locking screw (4b) for adjustable fastening of the feeler/dial indicator (AF).

4. Apparatus according to claim 2, in which the locking screw (2d) passes freely rotatable through a bore (1g) in the holding head (1) and cooperates with a nut (1h), characterized in that the end of the stretching screw (2d) is non-rotatably connected with the end (2b) of the chain (2), and that the nut (1h) rests freely movable against the limiting edge of the bore at the side (1b) of the holding head (1).

**Patentansprüche**

1. Vorrichtung zur Verwendung bei der Ausrichtung eines rotierenden Gegenstandes, beispielsweise zwei Spindeln (A, B), die in bezug zueinander axial ausgerichtet werden sollen, mit einer einstellbaren Befestigungseinrichtung, die am rotierenden Gegenstand befestigbar ist, für Fühler oder Skalen-Anzeiger (RF, AF) zum Ermitteln von möglichen Radial- und Axialbewegungen zwischen Bezugspunkten auf den Spindeln (A, B) während diese drehen und einem Haltekopf (1) Befestigungseinrichtungen (2) zum abnehmbaren Befestigen am Umfang der ersten Spindel (A, B) oder einem Kupplungsabschnitt (AK, BK), der auf den Spindeln montiert ist, wobei der genannte Haltekopf eine einstellbare Befestigungsstange (3) aufweist, die sich parallel zu der Spindel erstreckt, mit einem radial einstellbaren Fühler/ Skalen-Indikator (RF), der in radialem Eingriff mit dem Umfang der anderen Spindel oder dem Kupplungsabschnitt tritt, dadurch gekennzeichnet, daß die genannte Befestigungsstange (3) an einem Ende einen Befeistigungsschlitten (4) aufweist, der in bezug auf die erste Spindel radial einstellbar ist, mit einem axial einstellbaren Fühler/Skalenindikator (AF), der axial in Eingriff steht mit einer Fläche, die rechtwinklig zur anderen Spindel angeordnet ist, beispielsweise der Seitenfläche des anderen Kupplungsabschnittes.

2. Vorrichtung nach Anspruch 1, dadurch gekennzeichnet, daß die Befestigungseinrichtung (2) einen biegbaren, langgestreckten Körper beispielsweise eine Kette aufweist, die so ausgelegt ist, daß sie am Umfang um eine der Spindeln (A, B) oder einen kreisförmigen Zylinderabschnitt von deren Kupplungsabschnitt (AK, BK) legbar, wobei die genannte Kette (2) in Längsrichtung einstellbar an einem Ende (2a) mit einer Seite (1a) des Haltekopfes (1) befestigt ist, um eine Grob-Einstellung der Länge der Kette (2) zu ermöglichen, während ihr anderes Ende (2b) mit einer Strammzieheinrichtung (2c), beispielsweise einer Einstellschraube (2d) an der gegenüberliegenden Seite (1b) des Haltekopfes (1) befestigt ist, und daß das Ende (2a) der Kette (2) durch eine Öffnung (1i) der Seite (1a) des Haltekopfes (1) läuft, wobei eine Feststellschraube (1j) vorgesehen ist, um in Halteeingriff mit den Gelenken der Kette (2) zu treten, um die Grobeinstellung der Länge der Kette (2) zu ermöglichen.

3. Vorrichtung nach Anspruch 1, dadurch gekennzeichnet, daß die Befestigungsstange (3) gleitend einstellbar in einer Bohrung (1c) des Haltekopfes (1) montiert ist und eine langgestreckte Spur (3c) aufweist, um mit der Arretier-Schraube (1d) zusammenzuwirken, welche in die Bohrung (1c) ragt; daß der Fühler/Skalen-Indikator (RF) in einer Bohrung (3a) montiert ist, um gleitend einstellbar zu sein mittels einer Arretierschraube (3b) in der Befestigungsstange (3); daß der Befestigungsschlitten (4) einen langgestreckten Schlitz (4c) aufweist, um mit einem axialen Vorsprung (3d) am Ende der Befestigungsstange (3) in Eingriff zu treten, wobei der genannte Vorsprung mit einer Befestigungsschraube (3f) versehen ist für den Befestigungsschlitten (4); und daß der Befestigungsschlitten (4) an seinem anderen Ende eine Bohrung (4a) mit einer Arretierschraube (4b) zum einstellbaren Befestigen des Fühlers/Skalen-Indikators (AF) versehen ist.

4. Vorrichtung nach Anspruch 2, wobei die Arretierschraube (2d) sich frei drehbar durch eine Bohrung (1g) im Haltekopf (1) erstreckt und mit einer Schraubenmutter (1h) zusammenwirkt, dadurch gekennzeichnet, daß das Ende der Einstellschraube (2d) nicht drehbar mit dem Ende (2b) der Kette (2) verbunden ist und daß die Schraubenmutter (1h) frei drehbar gegen eine Anschlagskante in der Bohrung in der Seite (1b) des Haltekopfes (1) aufliegt.

**Revendications**

1. Appareil pour aligner un équipement tournant sur son axe, par exemple deux broches (A, B) qui doivent être alignées en direction axiale l'une par rapport à l'autre, comportant un moyen d'attachement ajustable pouvant être monté sur l'équipement tournant destiné à loger des palpeurs ou des indicateurs à cadran (RF, AF) permettant de déterminer des mouvements radiaux et axiaux possibles entre des points de référence sur les broches (A, B) pendant la rotation de ces dernières, et une tête de fixation (1) avec des moyens d'attachement (2) permettant une fixation amovible sur la périphérie de la première des broches (A, B) ou sur une partie d'accouplement (AK, BK) montée sur les broches, ladite tête de fixation (1) comportant une barre de fixation (3) ajustable, située parallèlement à ladite broche, avec un palpeur/indicateur à cadran (RF), ajustable dans le sens radial, venant en appui dans le sens radial sur la périphérie de l'autre broche ou de la partie d'accouplement, caractérisé en ce que ladite barre de fixation (3), sur l'une de ses extrémités, comporte une coulisse de fixation (4), ajustable dans le sens radial par rapport à la première broche, avec un palpeur/indicateur à cadran (AF) ajustable dans le sens axial, venant en appui dans le sens axial sur une surface perpendiculaire à l'autre broche, par example la face latérale de l'autre partie d'accouplement.

2. Appareil selon la revendication 1, caractérisé en ce que le moyen d'attachement (2) est constitué par un corps flexible longitudinal, par exemple une chaîne, destiné à se placer en état tendu sur le pourtour de l'une des broches (A, B) ou d'une surface circulaire cylindrique de sa partie d'accouplement (AK, BK), ladite chaîne (2), par l'une des extrémités (2a), étant fixée de façon ajustable dans le sens longitudinal sur un côté (1a) de la tête de fixation (1) afin de permettre un ajustage approximatif de la longueur de la chaîne (2), tandis que par son autre extrémité (2b) elle est fixée sur le côté opposé (1b) de la tête de fixation (1) à l'aide d'un moyen de serrage (2c), par exemple une vis de tension (2d), et que l'extrémité (2a) de la chaîne (2) passe par un trou (1i) du côté (1a) de la tête de fixation (1), une vis de blocage (1j) étant prévue pour venir s'engager fermement dans les maillons de la chaîne (2) de façon à permettre l'ajustement approximatif de la longueur de la chaine (2).

3. Appareil selon la revendication 1, caractérisé en ce que la batte de fixation (3) est montée dans un alésage (1c) de la tête de fixation (1) à réglage glissant, et présente une piste longitudinale (3c) destinée à coopérer avec une vis de blocage (1d) laquelle pénètre dans l'alésage (1c); que le palpeur/indicateur à cadran (RF) est monté dans un alésage (3a) à réglage glissant moyennant une vis de blocage (3b) dans la barre de fixation (3); que la coulisse de fixation (4) présente une rainure longidutinale (4c) permettant l'engagement d'un talon (3d) axial à l'extrémité de la barre de fixation (3), ledit talon étant pourvu d'une vis de blocage (3f) pour la coulisse de fixation (4); et que la coulisse de fixation (4), sur son autre extrémité, est pourvue d'un alésage (4a) avec une vis de blocage (4b) permettant une fixation ajustable du palpeur/indicateur à cadran (AF).

4. Appareil selon la revendication 2, dans lequel la vis de blocage (2d) passe, de façon à pouvoir tourner librement, par un alésage (1g) dans la tête de fixation (1) et coopère avec un écrou (1h), caractérisé en ce que l'extrémité de la vis de tension (2d) est reliée à l'extrémité (2b) de la chaîne (2) de façon non rotative, et que l'écrou (1h) se trouve en appui, de façon à pouvoir tourner librement, contre le bord délimitant de l'alésage du côté (1b) de la tête de fixation (1).

Fig. 1

Fig. 2

# Fig. 3

2